# EUROPEAN PATENT APPLICATION

(11) **EP 4 518 566 A1**
(43) Date of publication of application: **05.03.2025**
(21) Application number: 23796693.2
(22) Date of filing: 19.04.2023
(51) Int. Cl.: H04W 76/20, H04W 76/30, H04W 24/08, H04W 36/30, H04W 36/00, H04W 84/06, H04W 92/10, H04W 92/18

(54) **C2 COMMUNICATION MANAGEMENT METHOD**

(30) Priority: 27.04.2022 US 202263335225 P
(71) Applicant: LG Electronics Inc., Yeongdeungpo-gu Seoul 07336 (KR)
(72) Inventor: KIM, Laeyoung, Seoul 06772 (KR)
(74) Representative: Mooser, Sebastian Thomas
(86) International application number: PCT/KR2023/005290
(87) International publication number: WO 2023/211045

(57) **Abstract**

One disclosure of the present specification provides a method by which a UE performs. The method comprises steps in which: C2 communication is performed with a second UE through a command and control (C2) connection over PC5; the signal strength of the C2 connection over the PC5 is measured; an uncrewed aerial system (UAS) layer of a first UE transmits C2 connection state information to an application layer of the first UE, the C2 connection state information including information related to the measured signal strength of the C2 connection over the PC5; and whether to i) switch the C2 connection over the PC5 to a C2 connection over a network or ii) release the C2 connection over the PC5 is determined on the basis of a request for the application layer of the first UE based on the C2 connection state information.

## Description

### TECHNICAL FIELD

The present specification relates to mobile communications.

### BACKGROUND ART

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

When performing C2 communication between UEs, a method for switching between C2 connection via PC5 and C2 connection via network is required.

### DESCLOSURE

### TECHNICAL SOLUTION

The first UE can measure the signal strength of the C2 connection over PC5 with the second UE, and based on this, decide whether to disconnect the C2 connection or switch to the C2 connection over the network.

### BRIEF DESCRIPTION OF THE DRAWINGS

FIG. 1 shows an example of a communication system to which implementations of the present disclosure is applied.
FIG. 2 shows an example of wireless devices to which implementations of the present disclosure is applied.
FIG. 3 shows an example of UE to which implementations of the present disclosure is applied.
FIG. 4 illustrates an example 5G system structure to which an implementation of the present specification may be applied.
FIG. 5a and FIG. 5b illustrate the Layer-2 link establishment procedure.
FIG. 6 shows the scenario of switching the direct communication path between PC5 and Uu.
FIG. 7 illustrates an embodiment according to the disclosure of the present specification.
FIG. 8 shows the procedure of the first UE according to disclosure of the present specification.
FIG. 9 shows the procedure of the base station according to disclosure of the present specification.

### MODE FOR INVENTION

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5G NR (new radio).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

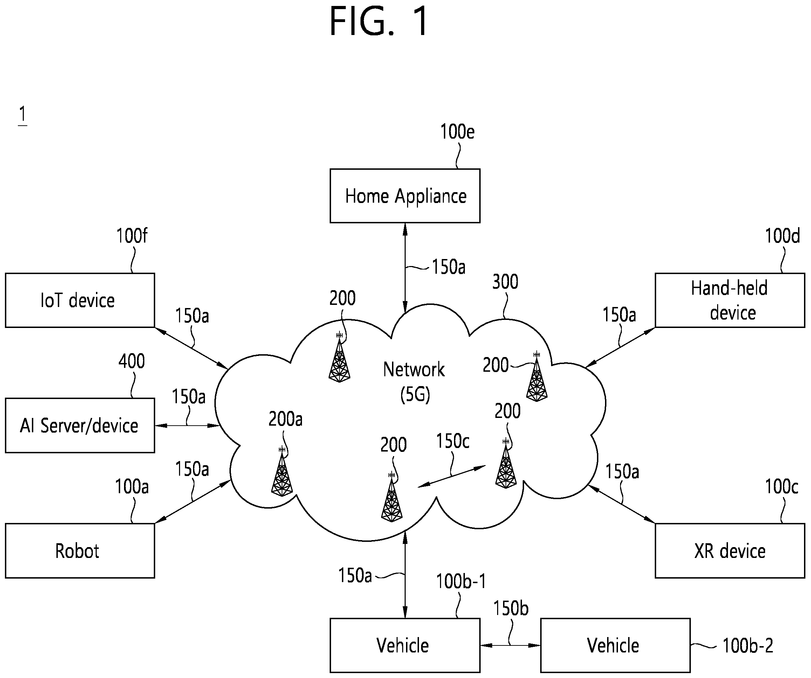

**FIG. 1** **shows an example of a communication system to which implementations of the present disclosure is applied.**

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/5G devices. The wireless devices 100a to 100f may include, without being limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). A UE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The UAV may be, for example, an aircraft aviated by a wireless control signal without a human being onboard.

The VR device may include, for example, a device for implementing an object or a background of the virtual world. The AR device may include, for example, a device implemented by connecting an object or a background of the virtual world to an object or a background of the real world. The MR device may include, for example, a device implemented by merging an object or a background of the virtual world into an object or a background of the real world. The hologram device may include, for example, a device for implementing a stereoscopic image of 360 degrees by recording and reproducing stereoscopic information, using an interference phenomenon of light generated when two laser lights called holography meet.

The public safety device may include, for example, an image relay device or an image device that is wearable on the body of a user.

The MTC device and the IoT device may be, for example, devices that do not require direct human intervention or manipulation. For example, the MTC device and the IoT device may include smartmeters, vending machines, thermometers, smartbulbs, door locks, or various sensors.

The medical device may be, for example, a device used for the purpose of diagnosing, treating, relieving, curing, or preventing disease. For example, the medical device may be a device used for the purpose of diagnosing, treating, relieving, or correcting injury or impairment. For example, the medical device may be a device used for the purpose of inspecting, replacing, or modifying a structure or a function. For example, the medical device may be a device used for the purpose of adjusting pregnancy. For example, the medical device may include a device for treatment, a device for operation, a device for (in vitro) diagnosis, a hearing aid, or a device for procedure.

The security device may be, for example, a device installed to prevent a danger that may arise and to maintain safety. For example, the security device may be a camera, a closed-circuit TV (CCTV), a recorder, or a black box.

The FinTech device may be, for example, a device capable of providing a financial service such as mobile payment. For example, the FinTech device may include a payment device or a point of sales (POS) system.

The weather/environment device may include, for example, a device for monitoring or predicting a weather/environment.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

AI refers to the field of studying artificial intelligence or the methodology that can create it, and machine learning refers to the field of defining various problems addressed in the field of AI and the field of methodology to solve them. Machine learning is also defined as an algorithm that increases the performance of a task through steady experience on a task.

Robot means a machine that automatically processes or operates a given task by its own ability. In particular, robots with the ability to recognize the environment and make self-determination to perform actions can be called intelligent robots. Robots can be classified as industrial, medical, home, military, etc., depending on the purpose or area of use. The robot can perform a variety of physical operations, such as moving the robot joints with actuators or motors. The movable robot also includes wheels, brakes, propellers, etc., on the drive, allowing it to drive on the ground or fly in the air.

Autonomous driving means a technology that drives on its own, and autonomous vehicles mean vehicles that drive without user's control or with minimal user's control. For example, autonomous driving may include maintaining lanes in motion, automatically adjusting speed such as adaptive cruise control, automatic driving along a set route, and automatically setting a route when a destination is set. The vehicle covers vehicles equipped with internal combustion engines, hybrid vehicles equipped with internal combustion engines and electric motors, and electric vehicles equipped with electric motors, and may include trains, motorcycles, etc., as well as cars. Autonomous vehicles can be seen as robots with autonomous driving functions.

Extended reality is collectively referred to as VR, AR, and MR. VR technology provides objects and backgrounds of real world only through computer graphic (CG) images. AR technology provides a virtual CG image on top of a real object image. MR technology is a CG technology that combines and combines virtual objects into the real world. MR technology is similar to AR technology in that they show real and virtual objects together. However, there is a difference in that in AR technology, virtual objects are used as complementary forms to real objects, while in MR technology, virtual objects and real objects are used as equal personalities.

NR supports multiples numerologies (and/or multiple subcarrier spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., FR1 and FR2. The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include narrowband internet-of-things (NB-IoT) technology for low-power communication as well as LTE, NR and 6G. For example, NB-IoT technology may be an example of low power wide area network (LPWAN) technology, may be implemented in specifications such as LTE Cat NB1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names.

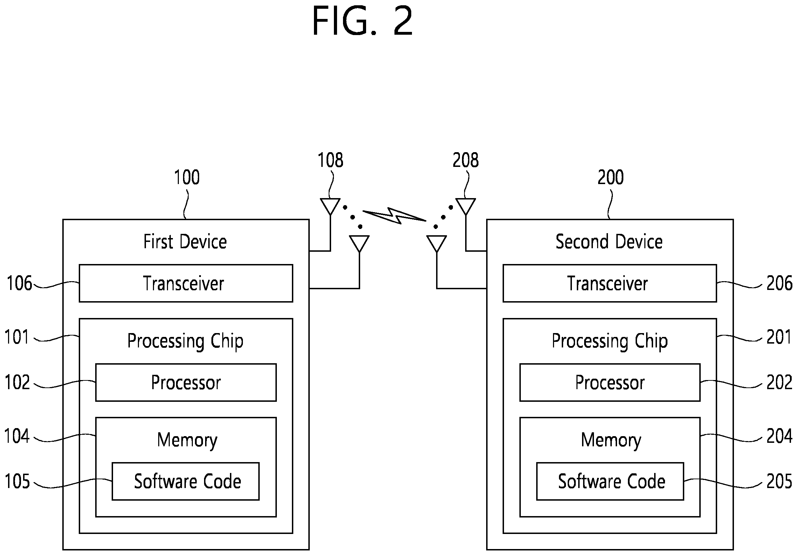

**FIG. 2** **shows an example of wireless devices to which implementations of the present disclosure is applied.**

In FIG. 2, The first wireless device 100 and/or the second wireless device 200 may be implemented in various forms according to use cases/services. For example, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1. The first wireless device 100 and/or the second wireless device 200 may be configured by various elements, devices/parts, and/or modules.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. Additional and/or alternatively, the memory 104 may be placed outside of the processing chip 101.

The processor 102 may control the memory 104 and/or the transceiver 106 and may be adapted to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a firmware and/or a software code 105 which implements codes, commands, and/or a set of commands that, when executed by the processor 102, perform the descriptions, functions, procedures, suggestions, methods and/or operational flowcharts disclosed in the present disclosure. For example, the firmware and/or the software code 105 may implement instructions that, when executed by the processor 102, perform the descriptions, functions, procedures, suggestions, methods and/or operational flowcharts disclosed in the present disclosure. For example, the firmware and/or the software code 105 may control the processor 102 to perform one or more protocols. For example, the firmware and/or the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with Radio Frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. Additional and/or alternatively, the memory 204 may be placed outside of the processing chip 201.

The processor 202 may control the memory 204 and/or the transceiver 206 and may be adapted to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a firmware and/or a software code 205 which implements codes, commands, and/or a set of commands that, when executed by the processor 202, perform the descriptions, functions, procedures, suggestions, methods and/or operational flowcharts disclosed in the present disclosure. For example, the firmware and/or the software code 205 may implement instructions that, when executed by the processor 202, perform the descriptions, functions, procedures, suggestions, methods and/or operational flowcharts disclosed in the present disclosure. For example, the firmware and/or the software code 205 may control the processor 202 to perform one or more protocols. For example, the firmware and/or the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as Physical (PHY) layer, Media Access Control (MAC) layer, Radio Link Control (RLC) layer, Packet Data Convergence Protocol (PDCP) layer, Radio Resource Control (RRC) layer, and Service Data Adaptation Protocol (SDAP) layer). The one or more processors 102 and 202 may generate one or more Protocol Data Units (PDUs), one or more Service Data Unit (SDUs), messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. For example, the one or more processors 102 and 202 may be configured by a set of a communication control processor, an Application Processor (AP), an Electronic Control Unit (ECU), a Central Processing Unit (CPU), a Graphic Processing Unit (GPU), and a memory control processor.

The one or more memories 104, 204 may be associated with the one or more processors 102, 202 and may store various forms of data, signals, messages, information, programs, codes, instructions, and/or commands. The one or more memories 104, 204 may comprise random access memory (RAM), dynamic RAM (DRAM), read-only memory (ROM), erasable programmable ROM (EPROM), flash memory, volatile memory, non-volatile memory, hard drives, registers, cache memory, computer-readable storage media, and/or combinations thereof. The one or more memories 104, 204 may be located inside and/or outside of the one or more processors 102, 202. Further, the one or more memories 104, 204 may be coupled to the one or more processors 102, 202 via various technologies, such as wired or wireless connections.

The one or more transceivers 106, 206 may transmit user data, control information, wireless signals/channels, etc. referred to in the descriptions, features, procedures, suggestions, methods, and/or flowcharts of operation disclosed herein to one or more other devices. The one or more transceivers 106, 206 may receive user data, control information, wireless signals/channels, etc. referred to in the descriptions, features, procedures, suggestions, methods, and/or flowcharts of operation disclosed herein from one or more other devices. For example, the one or more transceivers 106, 206 may be associated with the one or more processors 102, 202 and may transmit and receive wireless signals. For example, the one or more processors 102, 202 may control the one or more transceivers 106, 206 to transmit user data, control information, wireless signals, etc. to one or more other devices. Further, the one or more processors 102, 202 may control the one or more transceivers 106, 206 to receive user data, control information, wireless signals, etc. from the one or more other devices.

The one or more transceivers 106, 206 may be associated with one or more antennas 108, 208. Additionally and/or alternatively, the one or more transceivers 106, 206 may include one or more antennas 108, 208. The one or more transceivers 106, 206 may be configured to transmit and receive, via the one or more antennas 108, 208, user data, control information, wireless signals/channels, etc. referred to in the descriptions, features, procedures, suggestions, methods, and/or flowcharts of operation disclosed herein. As used herein, the one or more antennas 108, 208 may be a plurality of physical antennas, or a plurality of logical antennas (e.g., antenna ports).

The one or more transceivers 106, 206 may convert the received user data, control information, radio signals/channels, etc. from RF band signals to baseband signals in order to process the received user data, control information, radio signals/channels, etc. using the one or more processors 102, 202. The one or more transceivers 106, 206 may convert the processed user data, control information, radio signals/channels, etc. from baseband signals to RF band signals using the one or more processors 102, 202. To do so, the one or more transceivers 106, 206 may include (analog) oscillators and/or filters. For example, the one or more transceivers 106, 206 may up-convert an OFDM baseband signal to an OFDM signal via an (analog) oscillator and/or filter under the control of the one or more processors 102, 202, and transmit the up-converted OFDM signal at the carrier frequency. The one or more transceivers 106, 206 may receive the OFDM signal at the carrier frequency and, under the control of the one or more processors 102, 202, down-convert the OFDM signal to an OFDM baseband signal via an (analog) oscillator and/or filter.

Although not shown in FIG. 2, the wireless devices 100 and 200 may further include additional components. The additional components 140 may be variously configured according to types of the wireless devices 100 and 200. For example, the additional components 140 may include at least one of a power unit/battery, an Input/Output (I/O) device (e.g., audio I/O port, video I/O port), a driving device, and a computing device. The additional components 140 may be coupled to the one or more processors 102 and 202 via various technologies, such as a wired or wireless connection.

In the implementations of the present disclosure, a UE may operate as a transmitting device in Uplink (UL) and as a receiving device in Downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be adapted to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be adapted to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

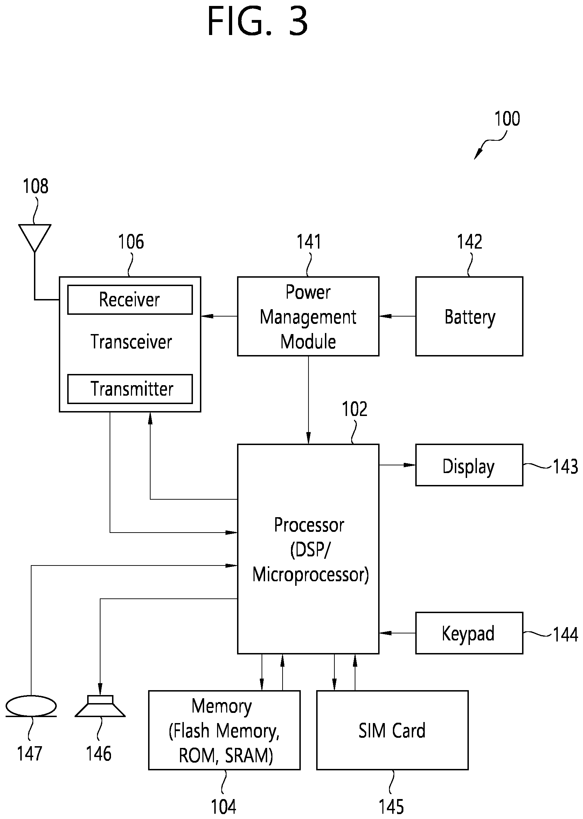

**FIG. 3** **shows an example of UE to which implementations of the present disclosure is applied.**

FIG. 3 shows an example of UE to which implementations of the present disclosure is applied.

Referring to FIG. 3, a UE 100 may correspond to the first wireless device 100 of FIG. 2.

A UE 100 includes a processor 102, a memory 104, a transceiver 106, one or more antennas 108, a power management module 141, a battery 142, a display 143, a keypad 144, a Subscriber Identification Module (SIM) card 145, a speaker 146, and a microphone 147.

The processor 102 may be adapted to implement the descriptions, functions, procedures, suggestions, methods and/or operational flowcharts disclosed in the present disclosure. The processor 102 may be adapted to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of DSP, CPU, GPU, a modem (modulator and demodulator). An example of the processor 102 may be found in SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®} or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 141 manages power for the processor 102 and/or the transceiver 106. The battery 142 supplies power to the power management module 141.

The display 143 outputs results processed by the processor 102. The keypad 144 receives inputs to be used by the processor 102. The keypad 144 may be shown on the display 143.

The SIM card 145 is an integrated circuit that is intended to securely store the International Mobile Subscriber Identity (IMSI) number and its related key, which are used to identify and authenticate subscribers on mobile telephony devices (such as mobile phones and computers). It is also possible to store contact information on many SIM cards.

The speaker 146 outputs sound-related results processed by the processor 102. The microphone 147 receives sound-related inputs to be used by the processor 102.

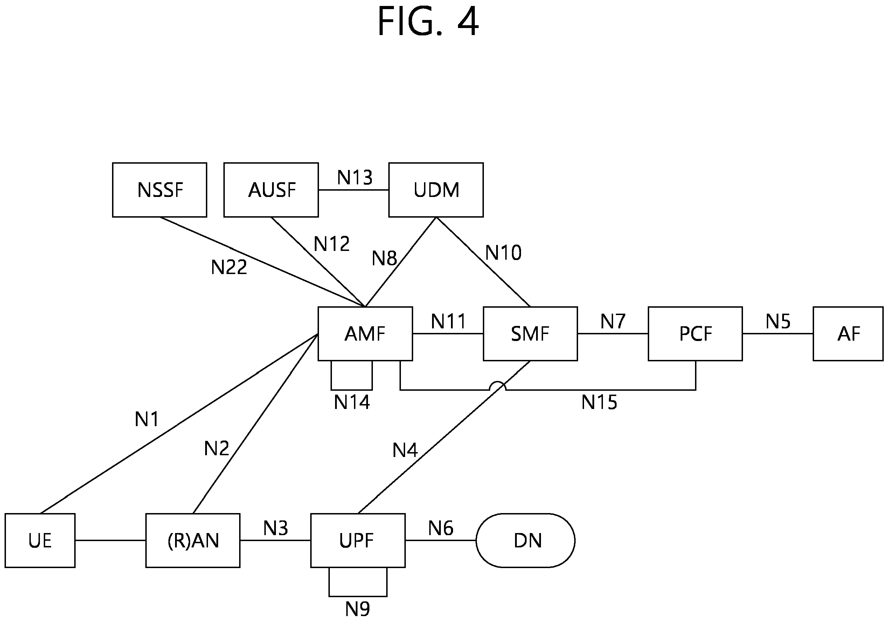

**FIG. 4** **illustrates an example 5G system structure to which an implementation of the present specification may be applied.**

The 5G system (5GS; 5G system) structure consists of the following network functions (NFs).
- AUSF (Authentication Server Function)
- AMF (Access and Mobility Management Function)
- DN (Data Network), e.g., operator services, internet access or third-party services
- USDF (Unstructured Data Storage Function)
- NEF (Network Exposure Function)
- I-NEF (Intermediate NEF)
- NRF (Network Repository Function)
- NSSF (Network Slice Selection Function)
- PCF (Policy Control Function)
- SMF (Session Management Function)
- UDM (Unified Data Management)
- UDR (Unified Data Repository)
- UPF (User Plane Function)
- UCMF (UE radio Capability Management Function)
- AF (Application Function)
- UE (User Equipment)
- (R)AN ((Radio) Access Network)
- 5G-EIR (5G-Equipment Identity Register)
- NWDAF (Network Data Analytics Function)
- CHF (Charging Function)

In addition, the following network functions may be considered.
- N3IWF (Non-3GPP InterWorking Function)
- TNGF (Trusted Non-3GPP Gateway Function)
- W-AGF (Wireline Access Gateway Function)

FIG. 4 shows the 5G system structure of a non-roaming case using a reference point representation that shows how various network functions interact with each other.

In FIG. 4, UDSF, NEF and NRF are not described for clarity of the point-to-point diagram. However, all network functions shown may interact with UDSF, UDR, NEF and NRF as needed.

For clarity, the connection between the UDR and other NFs (e.g., PCFs) is not shown in FIG. 4. For clarity, the connection between NWDAF and other NFs (e.g. PCFs) is not shown in FIG. 4.

The 5G system architecture includes the following reference points.
- N1: the reference point between the UE and the AMF.
- N2: reference point between (R)AN and AMF.
- N3: Reference point between (R)AN and UPF.
- N4: reference point between SMF and UPF.
- N6: Reference point between UPF and data network.
- N9: reference point between two UPFs.

The following reference points show the interactions that exist between NF services in NF.
- N5: Reference point between PCF and AF.
- N7: reference point between SMF and PCF.
- N8: reference point between UDM and AMF.
- N10: reference point between UDM and SMF.
- N11: reference point between AMF and SMF.
- N12: reference point between AMF and AUSF.
- N13: reference point between UDM and AUSF.
- N14: reference point between two AMFs.
- N15: Reference point between PCF and AMF in case of non-roaming scenario, and reference point between PCF and AMF of visited network in case of roaming scenario.
- N16: reference point between two SMFs (in case of roaming, between the SMF of the visited network and the SMF of the home network)
- N22: reference point between AMF and NSSF.

In some cases, it may be necessary to connect two NFs to each other to service the UE.

### <C2 Communication>

C2 communication is a user plane link that carries messages containing command and control information about the operation of the UAV from the UAV controller or Uncrewed Aerial System Traffic Management (UAS Traffic Management) to the UAV, or reports telemetry data from the UAV to its UAV controller or UTM.

When using 3GPP network as the transport network for supporting UAS services, the following C2 communication are considered to provision UAS services by guaranteeing QoS for the C2 communication:

Direct C2 communication: the UAV controller and UAV establish a direct C2 link to communicate with each other and both are registered to the 5G network using the radio resource configured and scheduled provided by the 5G network for direct C2 communication.

Network-Assisted C2 communication: the UAV controller and UAV register and establish respective unicast C2 communication links to the 5G network and communicate with each other via 5G network. Also, both the UAV controller and UAV may be registered to the 5G network via different NG-RAN nodes. The 5G network needs to support mechanism to handle the reliable routing of C2 communication.

UTM-Navigated C2 communication: the UAV has been provided a pre-scheduled flight plan, e.g. array of 4D polygons, for autonomous flying, however UTM still maintains a C2 communication link with the UAV in order to regularly monitor the flight status of the UAV, verify the flight status with up-to-date dynamic restrictions, provide route updates, and navigate the UAV whenever necessary.

In general, Direct C2 communication and Network-Assisted C2 communication are used by a human-operator using a UAV controller. UTM-Navigated C2 communication is used by the UTM to provide cleared flying routes and routes updates. In order to ensure the service availability and reliability of the C2 communication for UAS operation, especially when the UAV is flying beyond line of sight (BLOS) of the operator, redundant C2 communication links can be established for any C2 communication links from UAV controller or UTM to a UAV.

For reliability and service availability consideration, it is possible to activate more than one C2 communication with one as a backup link for C2 communication or switch among the applicable links for C2 communication.
- For example, Direct C2 communication can be used at first and then switch to the Network-Assisted C2 communication when the UAV is flying BLOS.
- For example, UTM-navigated C2 communication can be utilized whenever needed, e.g. for air traffic control, the UAV is approaching a No Drone Zone, and detected potential security threats, etc.

There are four control modes considered in the C2 communication for the UAV operation that are with different requirements, e.g. on message intervals, sizes, and end to end latencies, etc., including steer to waypoints, direct stick steering, automatic flight by UTM and approaching autonomous navigation infrastructure.
- Steer to waypoints: the control message contains flight declaration, e.g. waypoints, sent from the UAV controller or UTM to the UAV. The control mode is used in both of direct C2 communication and network-assisted C2 communication.
- Direct stick steering: the control message contains direction instructions sending from the UAV controller to the UAV while optionally video traffic is provided as feedback from the UAV to the UAV controller. The control mode is used in both of direct C2 communication and network-assisted C2 communication.
- Automatic flight by UTM: the control message contains a pre-scheduled flight plan, e.g. array of 4D polygons, sent from the UTM to the UAV, which thereafter flies autonomously with periodic position reporting. The control mode is used in UTM-Navigated C2 communication.
- Approaching autonomous navigation infrastructure: the control message contains direction instructions, e.g. waypoints, altitudes and speeds from the UTM to the UAV. When the UAV is landing/departing, the UTM coordinates more closely with autonomous navigation infrastructure, e.g. vertiport or package distribution center. The control mode is used in UTM-Navigated C2 communication.

C2 communication via PC5 may be used to enable the direct C2 communication described above.

V2X (vehicle-to-everything) communication will be described. For V2X communication, the following definitions may be used:
- V2X application: An application that uses one or more V2X services (e.g., active safety applications for vehicles, emergency warnings, vehicle safety and awareness, etc.). A V2X application may operate toward a V2X application server.
- V2X communication: Communication to support V2X services using Uu and/or PC5 reference points. V2X services are implemented through various types of V2X applications, such as vehicle-to-vehicle (V2V), vehicle-to-pedestrian (V2P), vehicle-to-infrastructure (V2I), and vehicle-to-network (V2N).
- V2X message: A dedicated messaging type for V2X services (e.g., intelligent transport system (ITS) messages).
- V2X service: A data service provided to V2X applications and optionally to V2X application servers. A V2X service belongs to one V2X service type. A V2X service is connected to one or more V2X applications, and a V2X application may be connected to one or more V2X services.
- V2X service type: A V2X service type identified by an ITS-AID (ITS application identifier) or a PSID (provider service identifier).

There are two operation modes for V2X communication: V2X communication via PC5 reference point and V2X communication via Uu reference point. These two operation modes may be used independently by the UE for transmission and reception.

V2X communication via PC5 reference point is supported by LTE and/or NR.

V2X communication via Uu reference point is supported by E-UTRA connected to 5GC and/or NR connected to 5GC. V2X communication via Uu reference point may only be unicast.

### < Layer-2 link establishment over PC5 reference point >

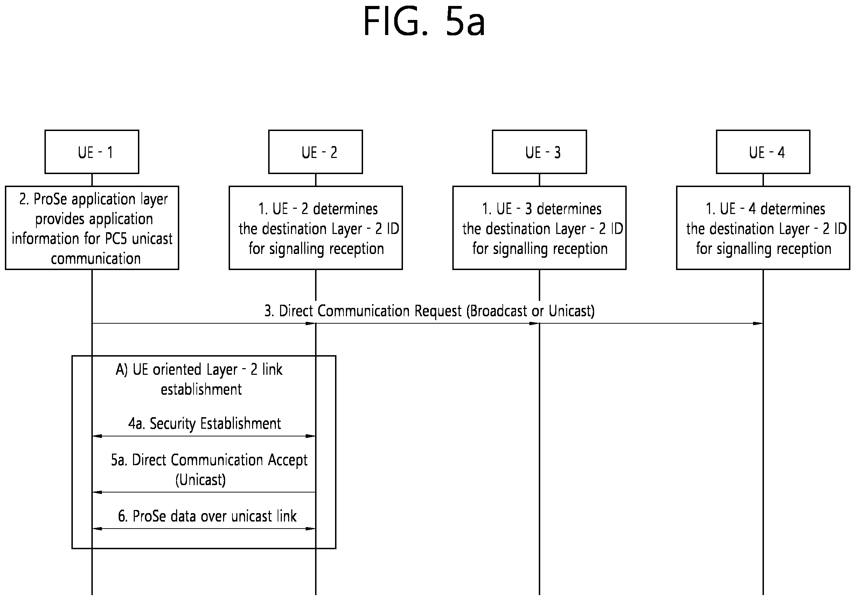

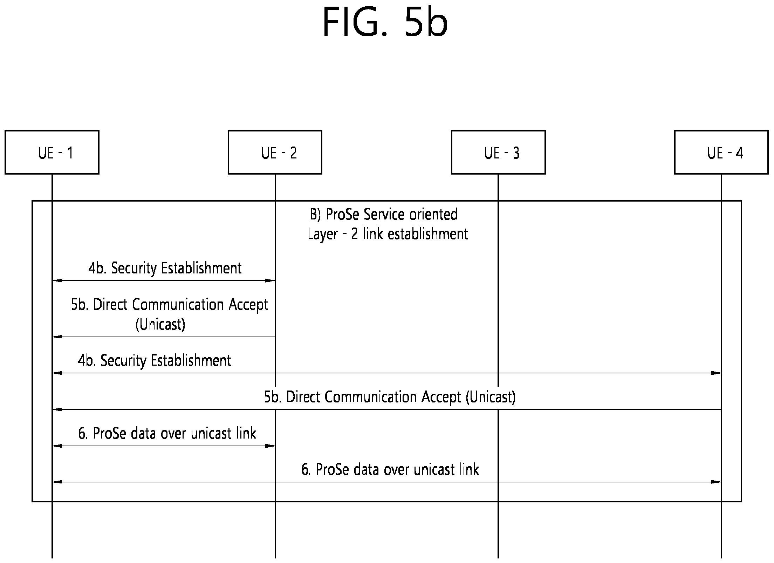

**FIG. 5a** **and** **FIG. 5b** **illustrate the Layer-2 link establishment procedure.**
1. The UE(s) determines the Destination Layer-2 ID for receiving signaling for PC5 unicast link establishment. 2.
2. the ProSe application layer of UE-1 provides application information for PC5 unicast communication. The application information includes ProSe Service Info, which is the application layer ID of the UE. The Application Layer ID of the target UE may be included in the application information.

The ProSe application layer of UE-1 may provide the ProSe application requirements for this unicast communication. UE-1 determines the PC5 QoS parameters and PFI.

If UE-1 decides to reuse the existing PC5 unicast link, the UE triggers the Layer-2 link modification procedure. 3.

3. UE-1 sends a Direct Communication Request message to initiate the unicast Layer-2 link establishment procedure. The Direct Communication Request message contains the following information
- Source User Info: The application layer ID of the initiating UE (i.e., the application layer ID of UE-1).
- If the ProSe application layer has provided the application layer ID of the target UE in step 2, it contains the following information
- Target User Info: The application layer ID of the target UE (i.e., UE-2's application layer ID).
- ProSe Service Info: Information about the ProSe identifier requesting the Layer-2 link establishment.
- Security Info: Information for security settings

The source Layer-2 ID and target Layer-2 ID are used to send direct communication request messages. The Destination Layer-2 ID can be a broadcast or unicast Layer-2 ID. If a unicast Layer-2 ID is used, the Target User Info must be included in the Direct Communication Request message.

UE-1 sends a Direct Communication Request message via PC5 broadcast or unicast using the Source Layer-2 ID and the Target Layer-2 ID.

The default PC5 DRX settings may be used to send and receive this message.

4. the security with UE-1 is set as below.

4a. If the Direct Communication Request message contains Target User Info, the target UE, i.e. UE-2, responds by establishing security with UE-1.

4b. If the Direct Communication Request message does not contain Target User Info, the UE interested in using the ProSe Service(s) announced over the PC5 unicast link with UE-1 shall respond by establishing security with UE-1.

If security protection is enabled, the UE-1 sends the following information to the target UE

If IP communication is used, the following information is sent to the destination UE
- IP address configuration: IP address configuration is required for this link for IP communication, indicating one of the following values "DHCPv4 server" if only the IPv4 addressing mechanism is supported by the initiating UE, i.e., if it is acting as a DHCPv4 server; or 'IPv6 router' if only the IPv6 addressing mechanism is supported by the initiating UE, i.e., if it is acting as an IPv6 router; or 'DHCPv4 server and IPv6 router' if both IPv4 and IPv6 addressing mechanisms are supported by the initiating UE; or 'Address assignment not supported' if neither IPv4 nor IPv6 addressing mechanism is supported by the initiating UE.
- Link-local IPv6 address: A locally formed link-local IPv6 address based on RFC 4862 when the UE-1 does not support the IPv6 IP addressing mechanism, i.e. when the IP address setting indicates "address assignment is not supported".
- When security protection is enabled, UE-1 sends QoS Info to the destination UE.

QoS Info: Information about the PC5 QoS Flow(s). For each PC5 QoS Flow, the PFI and corresponding PC5 QoS parameters (i.e., PQI and conditionally other parameters such as MFBR/GFBR, etc.
- When security protection is enabled, UE-1 sends the optional PC5 QoS rules to the destination UE.

The source Layer-2 ID is used for the security setup procedure. The Destination Layer-2 ID is set to the source Layer-2 ID of the received direct communication request message.

Upon receiving the security establishment procedure message, UE-1 obtains the Layer-2 ID of the peer UE for future communication for signaling and data traffic on this unicast link.

5. a Direct Communication Accept message is sent to UE-1 by the destination UE(s) that have successfully established security with UE-1.

5a. (UE oriented Layer-2 link establishment) If the Direct Communication Request message contains Target User Info, the target UE, i.e. UE-2, shall respond with a Direct Communication Accept message if the application layer ID for UE-2 matches.

5b. (ProSe Service oriented Layer-2 link establishment) If the Direct Communication Request message does not contain Target User Info, the UE interested in using the announced ProSe Service(s) shall respond to the request by sending a Direct Communication Accept message (UE-2 and UE-4).

The Direct Communication Accept message shall contain the following
- Source User Info: Application layer ID of the UE sending the Direct Communication Accept message.
- QoS Info: Information about the PC5 QoS Flow(s). For each PC5 QoS Flow, the PFI requested by UE-1 and the corresponding PC5 QoS parameters (i.e. PQI and conditionally other parameters such as MFBR/GFBR etc.) and optionally the associated ProSe identifier(s).
- Optional PC5 QoS rules.
- If using IP communication:
- IP address configuration: IP address configuration for this link is required for IP communication and indicates one of the following values
- "DHCPv4 Server" If only the IPv4 addressing mechanism is supported by the destination UE, i.e., it is acting as a DHCPv4 server; or
- "IPv6 router" if only the IPv6 addressing mechanism is supported by the target UE, i.e., it is acting as an IPv6 router; or
- "DHCPv4 server and IPv6 router" if the target UE supports both IPv4 and IPv6 addressing mechanisms; or
- "Address assignment not supported" if neither IPv4 nor IPv6 address assignment mechanisms are supported by the destination UE.
- Link-local IPv6 address: A locally formed link-local IPv6 address based on RFC 4862 when the target UE does not support IPv6 IP addressing mechanisms, i.e., when the IP address configuration indicates "address assignment is not supported", and UE-1 may include the link-local IPv6 address in the direct communication request message. The destination UE shall include a non-conflicting link-local IPv6 address.

If both UEs (i.e., the originating UE and the destination UE) choose to use link-local IPv6 addresses, duplicate address detection as defined in RFC 4862 must be disabled.

If either the initiating UE or the target UE indicates IPv6 routing support, the corresponding addressing procedure is performed after Layer 2 link establishment and the link local IPv6 address is ignored.

The ProSe layer of the UE that establishes the PC5 unicast link forwards the PC5 link identifier assigned to the unicast link and the PC5 unicast link related information to the AS layer. The PC5 unicast link related information includes Layer-2 ID information (i.e., Source Layer-2 ID and Destination Layer-2 ID). This allows the AS layer to maintain the PC5 link identifier along with the PC5 unicast link related information.

The two UEs can negotiate the PC5 DRX settings at the AS layer, and the PC5 DRX parameter values can be set per source and destination Layer-2 ID pair at the AS layer.

The ProSe data is transmitted over a unicast link set up as shown below.

The PC5 link identifier and PFI are provided to the AS layer with the ProSe data.

Optionally, additional Layer-2 ID information (i.e., source Layer-2 ID and target Layer-2 ID) is provided to the AS layer.

It is up to the UE implementation to provide the Layer-2 identity information to the AS layer.

UE-1 uses the source Layer-2 ID (i.e., UE-1's Layer-2 ID for this unicast link) and the target Layer-2 ID (i.e., the Layer-2 ID of the peer UE for this unicast link) to transmit ProSe data.

Since the PC5 unicast link is bidirectional, UE-1's peer UE can send ProSe data to UE-1 over the unicast link with UE-1.

### <Switching between PC5 and Uu>.

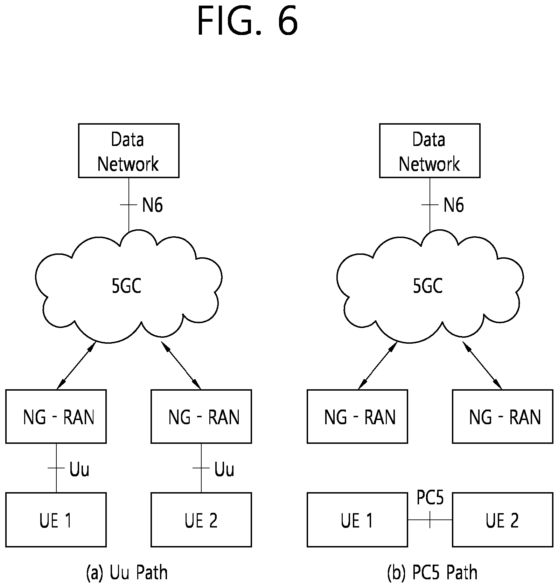

**FIG. 6** **shows the scenario of switching the direct communication path between PC5 and Uu.**

The scenario of direct communication path switching between PC5 and Uu refers to the switching between (a) Uu path and (b) PC5 path in FIG. 6.

"direct communication path switching between PC5 and Uu reference points" refers to the procedure of switching between the Uu direct communication path and the PC5 direct communication path when the UE communicates with other UEs. The direct communication path via PC5 reference points means that the communication with other UEs is performed using only 5G ProSe Direct Communication. The direct communication path via Uu reference point means that communication with other UEs is performed over the network.

### <Disclosure of the present specification>

A proposed method to support C2 connectivity may consist of a combination of one or more of the following behaviors/configurations/steps.

C2 communication and C2 connectivity may be used interchangeably in this specification.

User Equipment (UE) and terminal may be described interchangeably in this specification.

This specification is focused on proposals.

The method to support C2 connectivity proposed in this specification can be extended/variated and applied not only to UAS services but also to other services (e.g., ProSe services, V2X services, etc.). In this case, C2 communication/C2 connection may be interpreted interchangeably as communication/connection between two UEs.

This specification may provide a method for addressing C2 connectivity over PC5.

An uncrewed aerial vehicle (UAV) and an uncrewed aerial vehicle controller (UAV-C) may communicate with each other via a C2 connection over a PC5. There may be instances where the signal strength/condition of the C2 connection over the PC5 is weak or degraded. For example, due to obstacles between two UEs, they may be separated from each other.

The UE may measure the PC5 signal strength on the unicast link. Therefore, it may be considered useful to provide the application layer with the signal strength/status (e.g., strong/good, weak/poor) of the C2 connection over PC5. The PC5 signal strength of the unicast link as measured by the UE may be provided to the application layer at the UE.

In particular, this information is beneficial to the UAV-C so that the user (e.g., the drone pilot) knows the status of the C2 connection and can decide what to do for C2 communication. For example, the UAV-C may switch to a C2 connection over the network, or it may disconnect from the C2 connection after the UAV lands. To assist the UAV-C (or a user) in determining what to do for C2 communication, an indication of whether a C2 connection over the network is available may also be provided in the application layer of the UAV-C.

The layer of the UAV-C that collects the aforementioned C2 connectivity-related information (i.e., C2 connectivity status information) and provides it to the application in the method described above may be referred to as the "UAS layer". In the context of the UAS, the UAS layer may perform PC5-related operations that are related to operations performed by the V2X layer and the ProSe layer in the respective contexts of V2X and ProSe.

The UAS layer may also be referred to by other names (e.g., U2X (UAV to Everything) layer, UAV layer, etc.).

The application layer of the UAV-C may request the UAS layer to switch to a C2 connection over the network or to disconnect from the C2 connection. For example, these requests may be based on C2 connection status information provided by the UAS layer.

The UAV and UAV-C may be assumed to support C2 communication over PC5 and C2 communication over the network. Alternatively, if the UAV and UAV-C do not support C2 communication over the network, switching to a C2 connection over the network may not be executed, and providing information to the application layer indicating whether a C2 connection over the network is available may not be executed.

The following drawings are intended to illustrate specific embodiments of the present disclosure. The designations of specific devices or the designations of specific signals/messages/fields depicted in the drawings are for illustrative purposes only, and the technical features of the present disclosure are not limited to the specific designations used in the drawings.

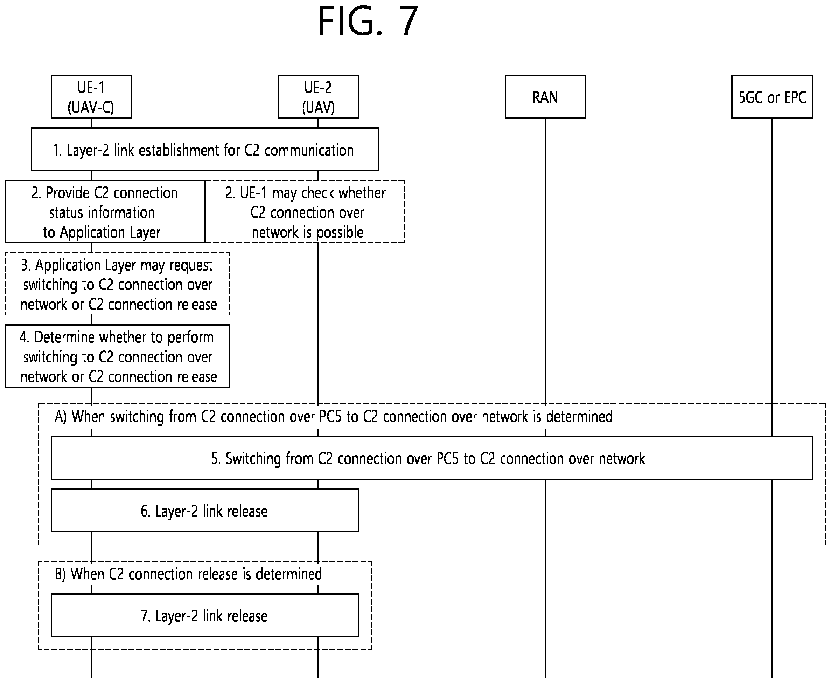

**FIG. 7** **illustrates an embodiment according to the disclosure of the present specification.**
1. for C2 communication over the PC5 reference point (i.e., C2 connection over PC5), UE-1 (UAV-C) and UE-2 (UAV) may establish a Layer-2 link. UE-1 and UE-2 may communicate with each other over the C2 connection through PC5.
   FIG. 5a and FIG. 5b may be referred for the Layer-2 link establishment procedure.
2. The UAS layer of UE-1 may provide C2 connection status information to the application layer. This provision of C2 connection status information may be performed periodically. Alternatively, the provision of C2 connection status information may be performed based on the measured PC5 signal strength of the unicast link being less than a set signal strength threshold.

The C2 connection status information may include the following:
a) Signal strength/status of the C2 connection over PC5 (e.g. strong/good, weak/bad)
   If the measured PC5 signal strength of the unicast link is less than (or equal to) the configured signal strength threshold, the signal strength/status of the C2 connection over PC5 may be set to weak/bad. Alternatively, based on the measured PC5 signal strength of the unicast link, the signal strength/status (strong/good or weak/bad) of the C2 connection via PC5 may be implementationally set. For example, the signal strength/status of the C2 connection may be set in the form of a level (e.g., 1, 2, 3, where bigger numbers indicate better) or high/medium/low, etc. After the UAS layer of UE-1 notifies the application layer that the signal strength/status of the C2 connection via PC5 is weak/bad, the UAS layer of UE-1 may notify the application layer when the signal strength/status of the C2 connection via PC5 becomes strong/good. The UAS layer may receive one or more of the following information from the Access Stratum (AS) layer: measured PC5 signal strength information of the unicast link, indicating that the measured PC5 signal strength information of the unicast link is less than (or equal to) the set signal strength threshold.
b) an indication of whether a C2 connection over the network is available.

An indication of whether a C2 connection over the network is available may be provided whenever the signal strength/status of the C2 connection over PC5 described above is provided to the application layer. Alternatively, only if the signal strength/status of the C2 connection via PC5 is weak/bad, an indication of whether a C2 connection over the network is possible may be provided to the application layer.

The indication of whether a C2 connection over the network is possible may be information about possible or impossible. Alternatively, the indication may be provided via b) only if C2 connectivity over the network is possible, and b) may not be provided if C2 connectivity over the network is not possible. Conversely, b) may indicate that C2 connectivity over the network is not possible, and b) may not be provided if C2 connectivity over the network is possible.

By means of b), the application layer may infer/recognize whether a C2 connection over the network (or switching to a C2 connection over the network) is possible.

To determine a), UE-1 may measure the PC5 signal strength of the unicast link established with UE-2 (i.e., the C2 connection over PC5). These measurements may be performed periodically. The signal strength/status of the unicast link may be an indication of link quality or whether QoS is satisfied. Alternatively, QoS satisfaction may be provided as a separate information.

For the measurement of the signal strength of the unicast link, reference may be made to contents about the measurement of the signal strength of the unicast link performed by the remote UE for UE-to-Network Relay selection/reselection as defined in TS 24.554 V1.2.0 and TS 38.300 V17.0.0. For example, what the Remote UE measures may be understood by substituting/extending what the UAV-C measures.

Basically, UE-1 may measure the PC5 signal strength from traffic, PC5-S messages, PC5 discovery messages, (etc.) transmitted by UE-2

To determine b), UE-1 may request, to UE-2, for information about whether UE-2 has network connectivity for C2 connection. Alternatively, UE-2 may provide UE-1 with information on whether UE-2 can connect network for the C2 connection. UE-2 may (periodically) measure the PC5 signal strength of the unicast link with UE-1, and if the measured PC5 signal strength is lower than a configured threshold, UE-2 may provide information to UE-1 about whether UE-2 can connect network for the C2 connection. Then, based on whether both UE-1 and UE-2 can connect network for C2 connectivity, UE-1 may determine whether C2 connectivity over the network is possible.

In contrast, UE-1 may infer/determine whether UE-2 can connect a network for C2 connectivity without being provided with information from UE-2 (e.g., based on the location of UE-2, provided by the network, having already established a C2 connection over the network with UE-2 (however, the actual C2 communication or exchange of C2 related traffic is being performed over a C2 connection via PC5), having established a connection other than a C2 connection over the network, etc.). In the above, the existing PC5-S message may be extended and used, or a new PC5-S message may be defined and used, for UE-1 to obtain information (about whether UE-2 can connect network for C2 connectivity) from UE-2.

The fact that the UE is able to connect to the network may be interpreted in a number of different ways, such as attaching/registering with the EPC/5GC, being in coverage of the network, being able to select a cell, having a PDN connection/PDU Session created, being able to connect to a data network, being able to connect to the Internet, being able to communicate with the UAS Service Supplier (USS), having performed/completed USS UAV Authorization/Authentication (UUAA), having performed/completed authorization for C2, etc.

UE-1 may determine that both it and UE-2 must be networkable to establish a C2 connection over the network. Alternatively, UE-1 may determine that a C2 connection over the network is possible if UE-2 is network reachable.

UE-1 and UE-2 may negotiate the above C2 connectivity status information (or b) during Layer-2 link formation and/or modification, or UE-1 may inform or request UE-2.

Whether and how the UE acting as UAV-C will provide C2 link status information to the application layer (e.g., periodically or event-based) may be provisioned to the UE as a policy/parameter for C2 communication. In addition, the set signal strength threshold may be provisioned to the UE as a policy/parameter for C2 communications or may be provided to the UE by the RAN. Alternatively, the set signal strength threshold may be implementation-specific information/value to the UE.

Furthermore, whether or not any C2 connection status information should be provided may also be provisioned to the UE as part of the policy/parameters for C2 communication. The provision of b) to the application layer may be based on information indicating that a C2 connection over the network (or switching to a C2 connection over the network) is allowed/authorized. Furthermore, the provision of the C2 connection status information to the application layer may be based on the UE implementation, or may be based on user settings/requests.

As part of the aforementioned policy/parameters for C2 communication, the method of provisioning to the UE may refer to the Authorization and Provisioning method for V2X services defined in TS 23.287 V17.2.0 and the Authorization and Provisioning method for ProSe services defined in TS 23.304 V17.2.1. That is, as part of the aforementioned policy/parameters for C2 communication, various method (such as provisioning in the mobile equipment (ME) of the UE, setting in the UICC of the UE, provided/changed by the application server to the UE; provided/changed by the application server to the UE via the PCF; provided/changed by the PCF to the UE) may be used.

3. the application layer of the UE-1 may request the UAS layer to switch to the C2 connection over the network or to disconnect from the C2 connection. This switching or disconnection request of the UE-1 may be performed, based on the C2 connection status information provided by the UAS layer.

Steps 2 and 3 may involve user interaction, which may be outside the scope of this specification.

4. the UE-1 may determine whether to switch to the C2 connection over the network or to disconnect from the C2 connection. The determination of the UE-1 may be based on the request from the application layer in step 3. Alternatively, the determination of the UE-1 may be based on the measured PC5 signal strength of the unicast link being lower than a configured threshold (which may be considered as a case where the state/quality of the unicast link has deteriorated or where the QoS cannot be satisfied).

If the measured PC5 signal strength of the unicast link is lower than the configured threshold, even if no switching or disconnection request from the application layer was provided in step 3, the UE-1 may determine whether to perform a switch to a C2 connection over the network or a C2 disconnection. The determination may be made based on the policies/parameters for C2 communication provisioned to the UE-1 or based on the UE implementation.

In step 3, if there is no request from the application layer and the measured PC5 signal strength on the unicast link is not lower than the configured threshold, the UE-1 may maintain and continue to use the C2 connection over PC5.

A) If the UE-1 determines to perform the switching from C2 connection over PC5 to C2 connection over the network, steps 5 and 6 may be performed.

5. if UE-1 and UE-2 have not yet attached to the EPC or registered with the 5GC, they may attach to the EPC or register with the 5GC. Also, if UE-1 and UE-2 have not established a PDN association or PDU session for C2 communication, they may do so. UE-2 may also require authorization for the C2 and UUAA (USS UAV Authorization/Authentication).

UE-1 may not need to perform EPC attach/5GC register and PDN connection/PDU Session establishment for UE-2 for C2 communication via the network with UE-2. Alternatively, only EPC attach/5GC register may be performed. UE-1 may connect to the network without using PDN connection/PDU Session (e.g., connecting to the network via WiFi/WLAN, etc.).

UE-1 and UE-2 may perform switching from C2 connection via PC5 to C2 connection over the network. Path switching may be performed. The switching may be performed using PC5-S messages.

Existing PC5-S messages may be extended and used for the PC5-S message, or new PC5-S messages (e.g., path switching request/authorization) may be defined and used for the PC5-S message. Alternatively, for the switching procedure, a method for switching paths between PC5 and Uu may be performed.

UE-1 and UE-2 may communicate with each other over the C2 connection over the network.

Once the switching to the C2 connection over the network is complete, the fact may be informed to the application layer.

6. the unicast link between UE-1 and UE-2 may be released.

B) If UE-1 determines to perform C2 disconnection, step 7 may be performed.

7. the unicast link between UE-1 and UE-2 may be released.

The unicast link release between UE-1 and UE-2 in steps 6 and 7 may be performed regionally.

Of the aforementioned C2 connectivity status information, providing the application layer with an indication of whether a C2 connection over the network is possible and performing switching to a C2 connection over the network may be performed based on the UE supporting it, or based on the C2 connection over the network (or switching to a C2 connection over the network) being permitted/authorized. The permit/authorization information may be provisioned to the UE as part of the policy/parameters for C2 communications.

The policies/parameters for C2 communication may be interpreted as policies/parameters for the UE's UAS services, UAS related behavior, or PC5 related behavior. The provisioning of these policies/parameters to the UE may refer to the Authorization and Provisioning methods defined in TS 23.287 V17.2.0 and TS 23.304 V17.2.1.

C2 connectivity over the aforementioned networks may also mean C2 connectivity over Uu/LTE-Uu/NR-Uu.

Although this specification describes that UAV-C performs actions such as measuring PC5 signal strength of unicast link with UAV, providing C2 connection status information to application layer, and determining to switch to C2 connection via network or disconnect C2 connection, conversely, UAV may perform these actions as well. In this case, it can be assumed that there is no user interaction.

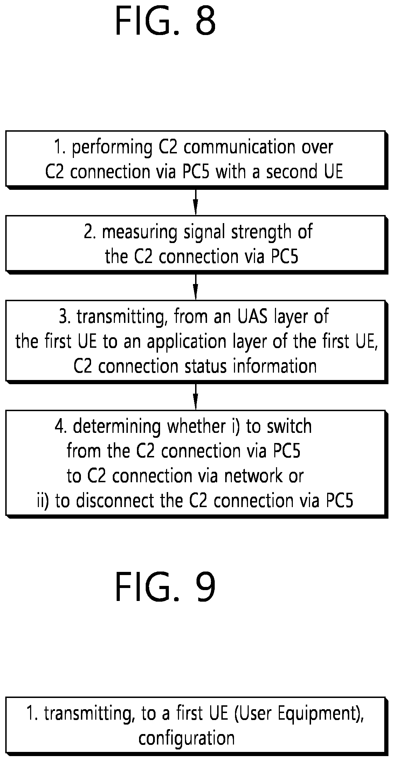

**FIG. 8** **shows the procedure of the first UE according to disclosure of the present specification.**
1. The first UE may perform C2 communication over C2 (Command and Control) connection via PC5 with a second UE.
2. The first UE may measure signal strength of the C2 connection via PC5.
3. The first UE may transmit, from an UAS (Uncrewed Aerial System) layer of the first UE to an application layer of the first UE, C2 connection status information.
   The C2 connection status information may include information related to the measured signal strength of the C2 connection via PC5.
4. The first UE may determine whether i) to switch from the C2 connection via PC5 to C2 connection via network or ii) to disconnect the C2 connection via PC5, based on request from the application layer of the first UE based on the C2 connection status information.

The first UE may be an UAV-C (Uncrewed Aerial Vehicle-Controller) and the second UE is an UAV.

The step of transmitting the C2 connection status information may be performed, based on the measured signal strength being lower than a threshold value.

The first UE may receive, from a base station, configuration.

The configuration may include the threshold value.

The C2 connection status information may include whether the first UE can perform C2 connection via network or not.

The C2 connection status information may include quality of the C2 connection via PC5 or whether QoS (Quality of Service) for the C2 connection via PC5 is satisfied.

The first UE may request, to the second UE, information whether the second UE can perform C2 connection via network or not.

The first UE may receive, from the second UE, information whether the second UE can perform C2 connection via network or not.

The C2 connection status information may include the information whether the second UE can perform C2 connection via network or not.

**FIG. 9** **shows the procedure of the base station according to disclosure of the present specification.**
1. The base station may transmit, to a first UE (User Equipment), configuration.

The configuration may include a threshold value.

The first UE may perform C2 (Command and Control) communication over C2 connection via PC5 with a second UE.

The first UE may measure signal strength of the C2 connection via PC5.

An UAS (Uncrewed Aerial System) layer of the first UE may transmit, to an application layer of the first UE, C2 connection status information.

The C2 connection status information may include information related to the measured signal strength of the C2 connection via PC5.

The first UE may determine whether i) to switch from the C2 connection via PC5 to C2 connection via network or ii) to disconnect the C2 connection via PC5, based on request from the application layer of the first UE based on the C2 connection status information.

The first UE may be an UAV-C (Uncrewed Aerial Vehicle-Controller) and the second UE is an UAV.

The transmitting the C2 connection status information may be performed, based on the measured signal strength being lower than a threshold value. The C2 connection status information may include whether the first UE can perform C2 connection via network or not.

The C2 connection status information may include quality of the C2 connection via PC5 or whether QoS (Quality of Service) for the C2 connection via PC5 is satisfied.

The first UE may request, to the second UE, information whether the second UE can perform C2 connection via network or not.

The first UE may receive, from the second UE, information whether the second UE can perform C2 connection via network or not.

The C2 connection status information may include the information whether the second UE can perform C2 connection via network or not.

Hereinafter, an apparatus for performing communication according to some embodiments of the present specification will be described.

For example, a first UE may include a processor, a transceiver, and a memory.

For example, a processor may be configured to be operably coupled with a memory and a processor.

The processor may perform: performing C2 communication over C2 (Command and Control) connection via PC5 with a second UE; measuring signal strength of the C2 connection via PC5; transmitting, from an UAS (Uncrewed Aerial System) layer of the first UE to an application layer of the first UE, C2 connection status information; wherein the C2 connection status information includes information related to the measured signal strength of the C2 connection via PC5, determining whether i) to switch from the C2 connection via PC5 to C2 connection via network or ii) to disconnect the C2 connection via PC5, based on request from the application layer of the first UE based on the C2 connection status information.

Hereinafter, a processor for providing communication according to some embodiments of the present specification will be described.

The processor is configured to: performing C2 communication over C2 (Command and Control) connection via PC5 with a second UE; measuring signal strength of the C2 connection via PC5; transmitting, from an UAS (Uncrewed Aerial System) layer of the first UE to an application layer of the first UE, C2 connection status information; wherein the C2 connection status information includes information related to the measured signal strength of the C2 connection via PC5, determining whether i) to switch from the C2 connection via PC5 to C2 connection via network or ii) to disconnect the C2 connection via PC5, based on request from the application layer of the first UE based on the C2 connection status information.

Hereinafter, a non-volatile computer readable medium storing one or more instructions for providing multicast service in wireless communication according to some embodiments of the present specification will be described.

According to some embodiments of the present disclosure, the technical features of the present disclosure may be directly implemented as hardware, software executed by a processor, or a combination of the two. For example, in wireless communication, a method performed by a wireless device may be implemented in hardware, software, firmware, or any combination thereof. For example, the software may reside in RAM memory, flash memory, ROM memory, EPROM memory, EEPROM memory, registers, hard disk, removable disk, CD-ROM, or other storage medium.

Some examples of a storage medium are coupled to the processor such that the processor can read information from the storage medium. Alternatively, the storage medium may be integrated into the processor. The processor and storage medium may reside in the ASIC. For another example, a processor and a storage medium may reside as separate components.

Computer-readable media can include tangible and non-volatile computer-readable storage media.

For example, non-volatile computer-readable media may include random access memory (RAM), such as synchronization dynamic random access memory (SDRAM), read-only memory (ROM), or non-volatile random access memory (NVRAM). Read-only memory (EEPROM), flash memory, magnetic or optical data storage media, or other media that can be used to store instructions or data structures or Non-volatile computer readable media may also include combinations of the above.

Further, the methods described herein may be realized at least in part by computer-readable communication media that carry or carry code in the form of instructions or data structures and that can be accessed, read, and/or executed by a computer.

According to some embodiments of the present disclosure, a non-transitory computer-readable medium has one or more instructions stored thereon. The stored one or more instructions may be executed by a processor of the base station.

The stored one or more instructions cause the processors to: performing C2 communication over C2 (Command and Control) connection via PC5 with a second UE; measuring signal strength of the C2 connection via PC5; transmitting, from an UAS (Uncrewed Aerial System) layer of the first UE to an application layer of the first UE, C2 connection status information; wherein the C2 connection status information includes information related to the measured signal strength of the C2 connection via PC5, determining whether i) to switch from the C2 connection via PC5 to C2 connection via network or ii) to disconnect the C2 connection via PC5, based on request from the application layer of the first UE based on the C2 connection status information.

The present specification may have various effects.

For example, UAV-C and UAV performing C2 communication via the PC5 path can perform C2 communication via the network at an appropriate time.

Effects that can be obtained through specific examples of the present specification are not limited to the effects listed above. For example, various technical effects that a person having ordinary skill in the related art can understand or derive from this specification may exist. Accordingly, the specific effects of the present specification are not limited to those explicitly described herein, and may include various effects that can be understood or derived from the technical characteristics of the present specification.

The claims described herein may be combined in various ways. For example, the technical features of the method claims of the present specification may be combined and implemented as an apparatus, and the technical features of the apparatus claims of the present specification may be combined and implemented as a method. In addition, the technical features of the method claim of the present specification and the technical features of the apparatus claim may be combined to be implemented as an apparatus, and the technical features of the method claim of the present specification and the technical features of the apparatus claim may be combined and implemented as a method. Other implementations are within the scope of the following claims.

## Claims

1. A method for performing communication, performed by a first UE (User Equipment), comprising:
performing C2 (Command and Control) communication over C2 connection via PC5 with a second UE;
measuring signal strength of the C2 connection via PC5;
transmitting, from an UAS (Uncrewed Aerial System) layer of the first UE to an application layer of the first UE, C2 connection status information;
wherein the C2 connection status information includes information related to the measured signal strength of the C2 connection via PC5,
determining whether i) to switch from the C2 connection via PC5 to C2 connection via network or ii) to disconnect the C2 connection via PC5, based on request from the application layer of the first UE based on the C2 connection status information.

2. The method of claim 1,
wherein the first UE is an UAV-C (Uncrewed Aerial Vehicle-Controller) and the second UE is an UAV.

3. The method of claim 1 or claim 2,
wherein the step of transmitting the C2 connection status information is performed, based on the measured signal strength being lower than a threshold value.

4. The method of claim 3, further comprising:
receiving, from a base station, configuration,
wherein the configuration includes the threshold value.

5. The method of any one of claims 1 to 4,
wherein the C2 connection status information includes whether the first UE can perform C2 connection via network or not.

6. The method of any one of claims 1 to 5,
wherein the C2 connection status information includes quality of the C2 connection via PC5 or whether QoS (Quality of Service) for the C2 connection via PC5 is satisfied.

7. The method of any one of claims 1 to 6, further comprising:
requesting, to the second UE, information whether the second UE can perform C2 connection via network or not; and
receiving, from the second UE, information whether the second UE can perform C2 connection via network or not,
wherein the C2 connection status information includes the information whether the second UE can perform C2 connection via network or not.

8. A first UE (User Equipment) to perform communication, comprising:
a transceiver; and
a processor,
wherein the processor performs operation comprising a method according to any one among claims 1 to 7.

9. A method for performing communication, performed by a base station, comprising:
transmitting, to a first UE (User Equipment), configuration,
wherein the configuration includes a threshold value,
wherein the first UE performs C2 (Command and Control) communication over C2 connection via PC5 with a second UE,
wherein the first UE measures signal strength of the C2 connection via PC5,
wherein an UAS (Uncrewed Aerial System) layer of the first UE transmits, to an application layer of the first UE, C2 connection status information,
wherein the C2 connection status information includes information related to the measured signal strength of the C2 connection via PC5,
wherein the first UE determines whether i) to switch from the C2 connection via PC5 to C2 connection via network or ii) to disconnect the C2 connection via PC5, based on request from the application layer of the first UE based on the C2 connection status information.

10. The method of claim 9,
wherein the first UE is an UAV-C (Uncrewed Aerial Vehicle-Controller) and the second UE is an UAV.

11. The method of claim 9 or claim 10,
wherein the transmitting the C2 connection status information is performed, based on the measured signal strength being lower than a threshold value.

12. The method of any one of claims 9 to 11,
wherein the C2 connection status information includes whether the first UE can perform C2 connection via network or not.

13. The method of any one of claims 9 to 12,
wherein the C2 connection status information includes quality of the C2 connection via PC5 or whether QoS (Quality of Service) for the C2 connection via PC5 is satisfied.

14. The method of any one of claims 9 to 13,
wherein the first UE requests, to the second UE, information whether the second UE can perform C2 connection via network or not,
wherein the first UE receives, from the second UE, information whether the second UE can perform C2 connection via network or not,
wherein the C2 connection status information includes the information whether the second UE can perform C2 connection via network or not.

15. A base station to perform communication, comprising:
a transceiver; and
a processor,
wherein the processor performs operation comprising method according to any one among claims 9 to 14.

16. A first apparatus in mobile communication, comprising:
at least one processor; and
at least one memory storing instructions and operably electrically connectable with the at least one processor to perform operation comprising a method according to any one among claims 1 to 7.

17. A non-volatile computer readable storage medium having recorded instructions,
wherein the instructions, based on being executed by one or more processors, cause the one or more processors to perform operation comprising a method according to any one among claims 1 to 7.
